# EUROPÄISCHE PATENTSCHRIFT

(11) **EP 1 816 583 B1**
(45) Veröffentlichungstag und Bekanntmachung des Hinweises auf die Patenterteilung: **07.09.2011**
(21) Anmeldenummer: 07001100.2
(22) Anmeldetag: 19.01.2007
(51) Int. Cl.: G06K 7/00, H01R 13/26

(54) **Kontaktiervorrichtung für eine Chipkarte**
Contact device for a chip card
Dispositif de contact pour une carte à puce

(30) Priorität: 07.02.2006 DE 102006005731
(43) Veröffentlichungstag der Anmeldung: 08.08.2007
(73) Patentinhaber: Lumberg Connect GmbH, 58579 Schalksmühle (DE)
(72) Erfinder: Richter, Michael, 58579 Schalksmühle (DE)
(74) Vertreter: Ostriga, Sonnet, Wirths & Roche

(56) Entgegenhaltungen:
- EP-A- 1 510 965
- WO-A-02/05102
- WO-A-98/27507
- US-A- 5 969 329
- US-A1- 2002 032 813

## Beschreibung

Die Erfindung betrifft eine Kontaktiervorrichtung für eine Chipkarte, insbesondere für eine SIM-Karte eines elektronischen Geräts wie z.B. Chipkartenlesegerät, Mobiltelefon od. dgl., mit einem Kontaktträger aus Isolierstoff und darin verankerten Kontaktelementen zur Verbindung der Kontakte der Chipkarte mit Leiterbahnen eines in dem Gerät enthaltenen Schaltungsträgers wie Leiterplatte, wobei die Kontaktelemente jeweils einen Kontaktabschnitt zur Kontaktierung der Chipkarte, einen Anschlussabschnitt zur Kontaktierung des Schaltungsträgers und einen Ankerabschnitt zur Festlegung im Kontaktträger aufweisen, entsprechend dem Oberbegriff des Anspruchs 1.

Solche Kontaktiervorrichtungen, in der Umgangssprache und auch in der Patentliteratur häufig auch mit "Chipkarten-Leser", "SIM-Card-Reader" od. dgl. bezeichnet, dienen zur Halterung und Bereitstellung der elektrischen Kontaktierung der Kontakte einer Chip- oder SIM-Karte (SIM = "Subscriber Identity Module") mit Leiterbahnen eines Schaltungsträgers wie insbesondere einer Leiterplatte, die in einem elektronischen Gerät, z.B. einem Mobiltelefon, untergebracht ist.

Die Kontaktelemente sind mit Ankerabschnitten im Isolierwerkstoff des Kontaktträgers befestigt, was zumeist durch Umspritzen geschieht. Das jeweils eine Ende eines Kontaktelements beaufschlagt Kontaktflächen der Chipkarte, wohingegen das jeweils andere Ende des Kontaktelements auf der Leiterbahn des Schaltungsträgers des Geräts aufgelötet ist. Dies geschieht in der Regel nach dem SMT-Verfahren ("Surface Mounting Technique"). Statt dessen ist es auch bekannt, diese Enden der Kontaktelemente als Andrückkontakte auszubilden, die unter Federspannung auf die Leiterbahnen drücken.

Die Ausgestaltung solcher Kontaktiervorrichtungen richtet sich nach ihrer Zweckbestimmung, insbesondere also der elektrischen Verbindung leitender Flächen miteinander.

Zum Stand der Technik wird zunächst auf EP 1 398 723 A2 verwiesen.

Weiterhin ist aus dem nächstliegenden Stand der Technik US 5,969,329 bekannt, eine Schutzbeschaltung für eine Kontaktiervorrichtung vorzusehen und diese im Rahmen der Kontaktiervorrichtung anzuordnen.

Elektronische Bauelemente im allgemeinen in Kontaktiervorrichtungen vorzusehen, ist auch aus WO 98/27507 und US 2002/0032813 A1 bekannt.

Aufgabe der vorliegenden Erfindung ist es, eine Kontaktiervorrichtung der als bekannt vorausgesetzten Art im Sinne einer Funktionserweiterung fort zu entwickeln.

Entsprechend des unabhängigen Anspruches 1 besteht die Lösung dieser Aufgabe darin, eine kleingebaute Kontaktiervorrichtung zu schaffen, in der elektronische Bauelemente integriert sind.

Diese in die Kontaktiervorrichtung eingebauten elektronischen Bauelemente können mindestens eine Schutzbeschaltung wie eine solche gegen hohe Ströme, Überspannungen oder Energien bei hohen Frequenzen und/oder eine EMI-Filterfunktion realisieren. Alternativ oder zusätzlich können die Bauelemente Pullup- oder Pulldown-Widerstände umfassen.

Herkömmlicherweise befinden sich derartige elektronische Bauelemente auf dem Schaltungsträger des Geräts, also z.B. auf der Leiterplatte eines Mobiltelefons. Sie dienen hauptsächlich dazu, Schutzfunktionen gegen Überströme, Überspannungen, elektromagnetische Inferenzen (EMI) bereitzustellen, die bei der Handhabung der Chipkarte und/oder deren oder des Geräts bestimmungsgemäßen Gebrauch auftreten können.

Der wesentliche Kern vorliegender Erfindung besteht demnach darin, diese üblichen und üblicherweise benötigten Bauelemente quasi aus der geräteinternen Schaltungsanordnung herauszulösen und in die Kontaktiervorrichtung zu verlegen. Hierdurch wird eine Vielzahl von Vorteilen erreicht.

Zum einen kann der auf der geräteinternen Leiterplatte frei werdende Raum eingespart oder zur Anordnung weiterer bzw. zusätzlicher Bauelemente verwendet werden, was insbesondere im Hinblick auf die Tendenz wichtig ist, die Funktionsvielfalt der Geräte zu steigern, ohne eine Vergrößerung ihrer Baugröße in Kauf nehmen zu müssen bzw. die Geräte sogar noch weiter zu verkleinern.

Ein weiterer Vorteil besteht in einer Vereinfachung des Layouts der Geräte-Platine und in der Tatsache, dass sich der Gerätehersteller selbst um die zum Betrieb der Chipkarte erforderlichen elektronischen Details nicht mehr zu kümmern braucht. Aufgrund der Erfindung über nimmt dies nun der Zulieferer als Hersteller der Kontaktiervorrichtung.

Bei den hier angesprochenen Bauelementen handelt es sich konkret vornehmlich um Varistoren. Das sind spannungsabhängige Widerstände, bei denen oberhalb einer bestimmten Schwellspannung, die typisch ist für den jeweiligen Varistor, der Widerstand abrupt kleiner wird. Varistoren eignen sich daher hervorragend als Überspannungsschutz und dienen somit zum Schutz der empfindlichen elektronischer Schaltungen. Pullup- bzw. Pulldown-Widerstände dienen - kurz gefasst - dazu, eine elektrische Spannung entweder bis zur Betriebsspannung hochzuziehen (Pullup-Widerstand) oder auf Masse (Ground) hinunterzuziehen (Pulldown-Widerstand). Derartige Widerstände sorgen bei digitalen Eingängen dafür, dass bei einem offenen Kontakt der korrekte logische Eingangspegel (HIGH oder LOW) garantiert ist.

In weiterer Ausgestaltung der Erfindung sind die elektronischen Bauelemente vorzugsweise in einen Chip integriert. Die Bauelemente bzw. der Chip sind entsprechend weiterer Ausgestaltung der Erfindung vom Isoliermaterial des Kontaktträgers zumindest teilweise umspritzt. Es ist jedoch auch denkbar, dass man den Chip in eine zu seiner Aufnahme bestimmte Ausnehmung des Kontaktträgers einsetzt.

Im Rahmen der Erfindung können die Kontaktelemente Bestandteile eines Stanzgitters sein, das Anschlussflächen für an den elektronischen Bauelementen bzw. an dem Chip befindliche Kontaktflächen ausbildet.

Im Rahmen der Erfindung sind grundsätzlich diskrete elektronische Bauelemente als integraler Bestandteil einer gattungsgemäßen Kontaktiervorrichtung denkbar, wenngleich ein Chip aufgrund seiner Fähigkeit, Bauelemente hochintegriert und daher äußerst Platz sparend in sich aufzunehmen, bevorzugt wird. Dies insbesondere unter Berücksichtigung der Tatsache, dass eine Kontaktiervorrichtung der gattungsgemäßen bzw. der Erfindung zugrunde liegenden Art selbst ein sehr klein bauendes Teil ist.

Im Hinblick hierauf ist eine besonders geschickte Auslegung und Gestaltung der Kontaktiervorrichtung zweckdienlich, um die elektronischen Bauteile bzw. den Chip optimal in die Kontaktiervorrichtung integrieren zu können. Diesbezüglich schlägt die Erfindung gemäß weiterer Ausgestaltung vor, dass Abschnitte des Stanzgitters zumindest bereichsweise in unterschiedlichen Ebenen angeordnet sind. Dabei können in einer auf die Grundebene des Stanzgitters folgenden Ebene die Anschlussflächen für die elektronischen Bauelemente bzw. den Chip und in einer darauf folgenden weiteren Ebene die Lötanschlussflächen der Kontaktelemente angeordnet sein. Der jeweilige Abstand bzw. Versatz der Ebenen kann geschickter Weise durch Verkröpfungen, also stufenbildenden Verformungen, der entsprechenden Abschnitte des Stanzgitters erzeugt sein.

Was die mehr konkrete Integration des Chips in den Kontaktträger der Kontaktiervorrichtung betrifft, ist daran gedacht, den Chip allseits mit dem Isolierwerkstoff des Kontaktträgers zu umspritzen. Dies hat einerseits herstellungstechnische Vorteile, da man Idealerweise den Chip im gleichen Arbeitsgang umspritzen kann wie die Kontaktelemente. Zum anderen wäre durch diese vollständige Kapselung des Chips im Isolierwerkstoff des Kontaktträgers der Chip bestmöglich gegen äußere Einflüsse geschützt.

Der Chip kann auf die Anschlussflächen des Stanzgitters aufgelötet oder aufgeklebt sein. Dies wird in der Regel erfolgen, bevor man ihn mit dem Isoliermaterial der Kontaktiervorrichtung umspritzt.

Gleichwohl ist auch eine bereits weiter oben angesprochene Lösung denkbar, nämlich, dass der Chip in eine zu seiner Aufnahme bestimmte Ausnehmung des Kontaktträgers eingesetzt wird. Werkzeugtechnisch würde eine solche Aufnahme beim Umspritzen der Kontaktelemente als Aufnahmetasche ausgeführt sein, in die man anschließend, d.h. nach an sonstiger Fertigstellung der Kontaktiervorrichtung, den Chip einsetzt und durch Löten, Kleben od.dgl. befestigt.

Die Erfindung wird nachfolgend unter Bezugnahme auf ein in den beiliegenden Zeichnungen dargestelltes Ausführungsbeispiel näher erläutert. Es zeigen:
- Fig. 1: eine perspektivische Ansicht einer Kontaktiervorrichtung entsprechend der Erfindung mit Blick auf die zur Aufnahme einer Chipkarte bestimmte Oberseite,
- Fig. 2: eine perspektivische Ansicht der Kontaktiervorrichtung mit Blick auf ihre zur Schaltungsanordnung des Geräts, in das sie eingebaut werden soll, weisende Unterseite,
- Fig. 3: eine perspektivische Ansicht aller Kontaktelemente dieser Kontaktiervorrichtung einschließlich eines Chips,

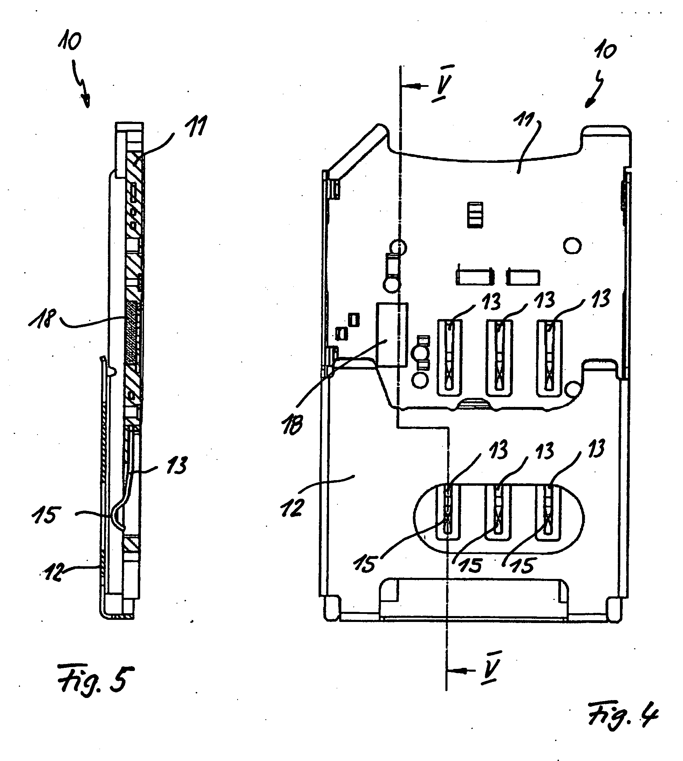

- Fig. 4: eine Draufsicht auf die Kontaktiervorrichtung,
- Fig. 5: einen Längsschnitt durch die Kontaktiervorrichtung entsprechend der Schnittangabe V-V in Fig. 4,
- Fig. 6: eine Draufsicht auf die Kontaktelemente sowie den darauf angeordneten Chip,
- Fig. 7: einen gegenüber Fig. 6 erheblich vergrößerten Längsschnitt durch die Kontaktelemente entsprechend der dortigen Schnittlinie VII-VII,
- Fig. 8: eine Fig. 3 ähnliche perspektivische Ansicht der Kontaktelemente, nun jedoch mit Blickrichtung von unten,
- Fig. 9: eine perspektivische Ansicht des Chips mit Blick auf seine Kontaktflächen aufweisende Unterseite, und
- Fig. 10: eine Explosionsdarstellung der Fig. 8 zur Erläuterung verschiedener Ebenen der Kontaktanordnung.

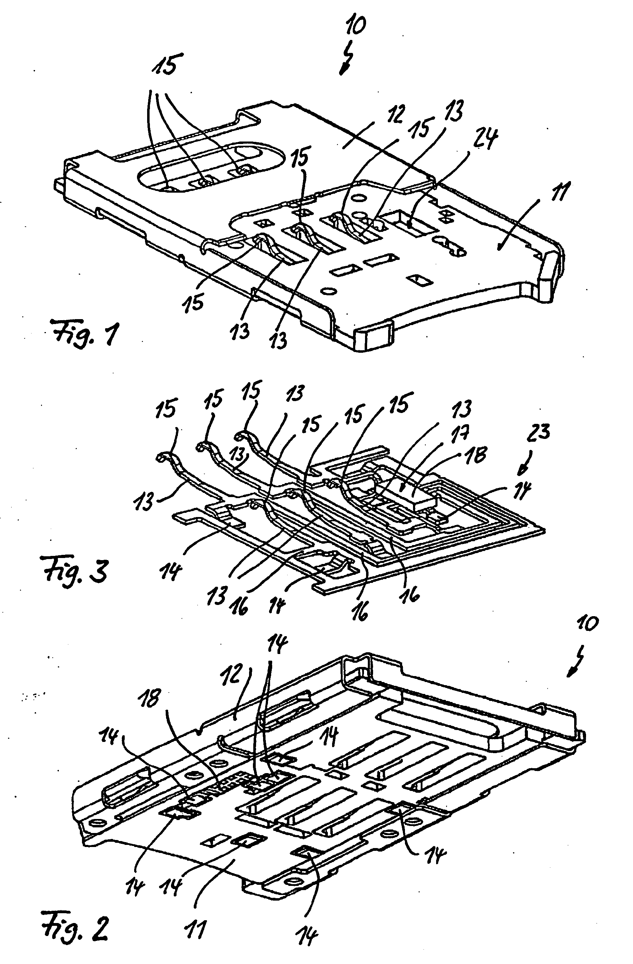

Fig. 1 zeigt eine insgesamt mit 10 bezeichnete Kontaktiervorrichtung für Chip-Karten, insbesondere für SIM-Karten, wie sie beispielsweise in Mobiltelefonen eingesetzt werden.

Die Kontaktiervorrichtung 10 umfasst einen Kontaktträger 11 und eine sich über einen Teil seiner Fläche erstreckende Abdeckung 12, die auch als am Kontaktträger 11 schwenkbar angelenkter Deckel ausgeführt sein könnte, was ebenfalls Stand der Technik ist.

Im Kontaktträger 11, der aus elektrisch nicht leitendem Isoliermaterial wie insbesondere Kunststoff besteht, sind - beim Ausführungsbeispiel sechs - Kontaktelemente 13 als sog. Lesekontakte angeordnet zur Kontaktierung der Kontaktflächen einer nicht dargestellten SIM-Karte, die in bekannter Weise zwischen Kontaktträger 11 und Abdeckung 12 in die Vorrichtung 10 eingesetzt wird. Mit 14 sind SMD-Lötfüßchen bezeichnet, die zur elektrisch leitenden Verbindung zu einem ebenfalls nicht gezeigten Schaltungsträger, also insbesondere einer Leiterplatte dienen.

Im Kontext der Erfindung weisen die Kontaktelemente 13 jeweils einen Kontaktabschnitt 15 zur Kontaktierung der Chip-Kontaktflächen auf. Die Lötfüßchen 14, die dem jeweils anderen Ende eines jeden Kontakts zugeordnet sind, stellen die Anschlussabschnitte zur Kontaktierung der Leiterbahnen des geräteinternen Schaltungsträgers dar. Zwischen seinem Kontaktabschnitt 15 und dem zugehörigen Anschlussabschnitt (Lötfüßchen 14) weist jedes Kontaktelement 13 mindestens einen Ankerabschnitt 16 auf, über den das Kontaktelement 13 durch Umspritzen im Kontaktträger 11 befestigt ist.

Die Besonderheit besteht nun darin, dass im Kontaktträger 11 elektronische Bauelemente 17 integriert sind, die beim dargestellten Ausführungsbeispiel als Chip 18 realisiert sind. Dieser Chip 18 umfasst beispielsweise Varistoren und/oder Pulldown- oder Pullup-Widerstände.

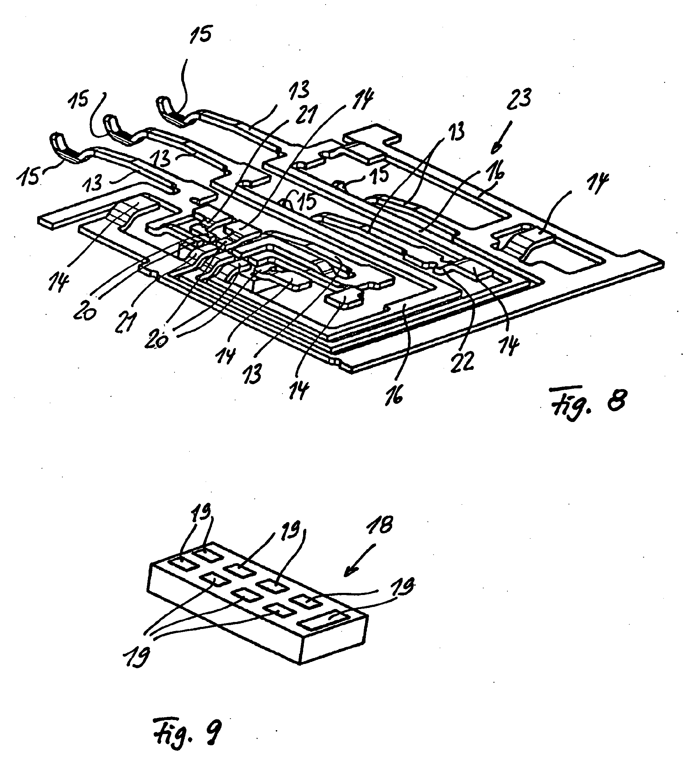

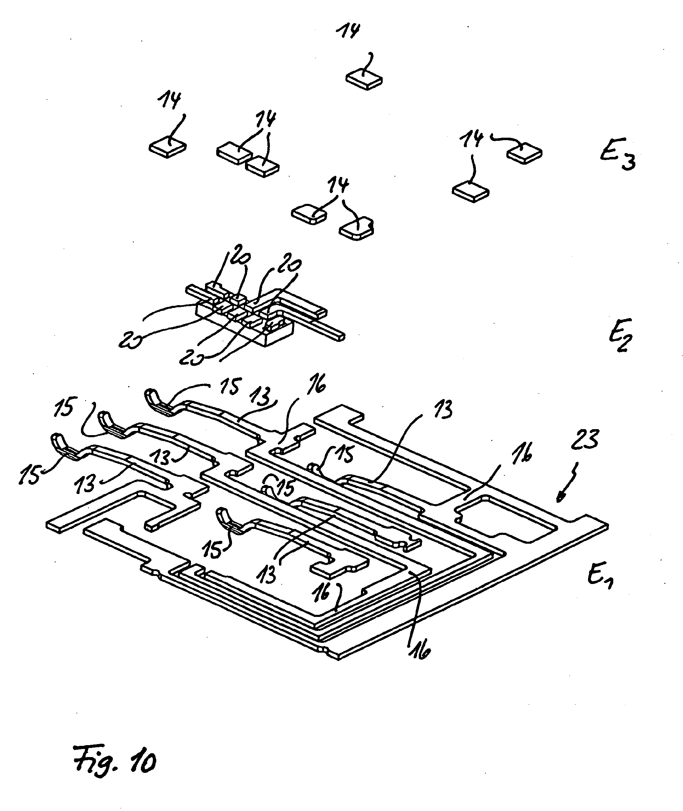

Aufgrund der elektrisch sinnvollen Beschaltung dieser elektronischen Bauelemente sind bei einigen der insgesamt sechs Kontaktelemente 13 deren Kontaktabschnitte 15, Ankerabschnitte 16 und Anschlussabschnitte 14 einstückig-stoffschlüssig, also durchgehend, miteinander verbunden, wohingegen andere Kontaktelemente 13 unterbrochen sind. Hier stellen die Ankerabschnitte 14 für Kontaktflächen 19 des Chips 18 Bauelement-Anschlussflächen 20 bereit. Dies ist am deutlichsten aus den Fig. 8 und 10 zu ersehen. Wie ebenfalls zu erkennen ist, stehen einige dieser Bauelement-Anschlussflächen 20 unmittelbar mit Anschlussabschnitten (Lötfüßchen 14) in stoffschlüssiger Verbindung, andere über meist orthogonal geführte Wege mit den Kontaktabschnitten 15.

Um der, wenngleich nur geringen, Bauhöhe des Chips 18 von ca. 0,5 mm (bei einer Grundfläche von z.B. 5 x 1 mm) Rechnung zu tragen wie auch dem Umstand, dass nur die Anschlussabschnitte 14 die Leiterbahnen des Schaltungsträgers des Geräts kontaktieren dürfen, ist die gesamte Kontaktanordnung entsprechend Fig. 8 in drei Ebenen E₁, E₂ und E₃ angeordnet, die Fig. 10 als Explosionsdarstellung veranschaulicht. Dabei ist die Ebene E₃ dem Schaltungsträger des Gerätes zugewandt und die Ebene E₁ der in die Kontaktiervorrichtung einzusetzenden Chipkarte. Mit Ausnahme der Kontaktabschnitte 15 sind die der Ebene E₁ zugehörigen Kontaktelementabschnitte als Ankerabschnitte 15 zumindest weitestgehend im Kunststoffmaterial des Kontaktträgers 11 eingebettet. In der darauf folgenden Ebene E₂ sind sämtliche Anschlusselemente 20 für die elektronischen Bauelemente 17 bzw. den Chip 18 angeordnet und in einer weiteren Ebene lediglich die Anschlussabschnitte (Lötfüßchen 14).

Genau genommen gibt es noch eine vierte Ebene, nämlich die Ebene der in Richtung auf die Chipkarte aus dem Kontaktträger 11 heraustretenden Lesekontakt-Abschnitte 15.

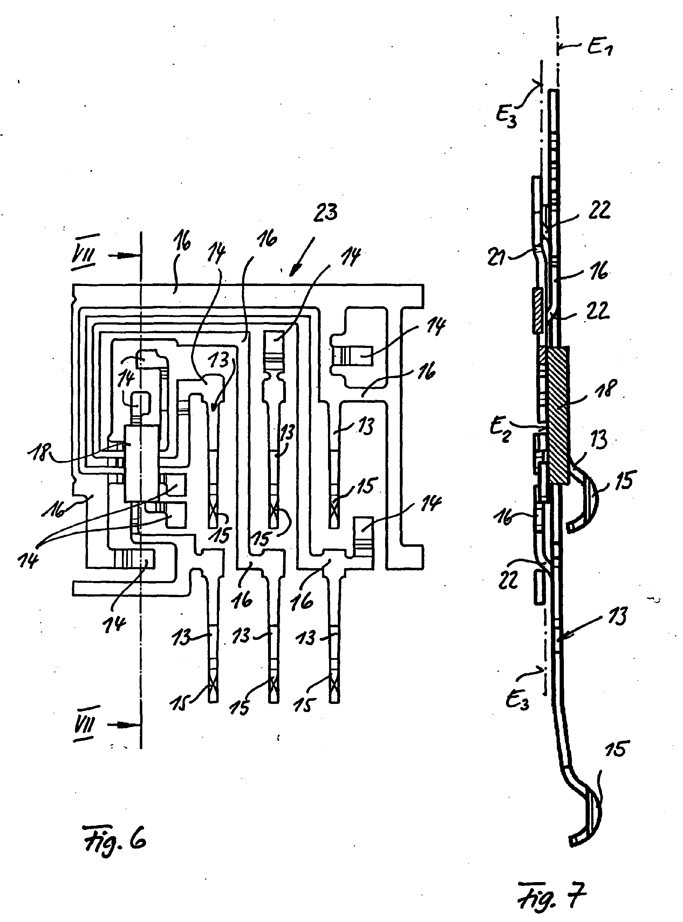

Die geringen Abstände zwischen den Ebenen E₁ und E₂ sowie E₂ und E₃ werden durch Stufen in Form kleiner Verkröpfungen 21 und 22 überwunden. Mit 21 sind dabei die Stufen bezeichnet, die von einer Ebene E₁ oder E₂ zur nächsten E₂ oder E₃ führen, wohingegen die Stufe 22 einen doppelt so großen Übergang von der Ebene E₁ in die Ebene E₃ bezeichnet. Auch in Fig. 7 sind die Ebenen E₁, E₂ und E₃ sowie einige der Verkröpfungsstufen 21 und 22 veranschaulicht.

Die Integration der elektronischen Bauelemente 17 bzw. des Chips 18 erfolgt vorzugsweise durch zumindest teilweise oder auch vollständiges Umspritzen mit dem Isolierwerkstoff des Kontaktträgers 11. Allerdings kann es auch in Frage kommen, den Chip 18 in eine in Fig. 1 mit 24 bezeichnete Ausnehmung des Kontaktträgers 11 einzusetzen, nachdem der Kontaktträger ansonsten vollständig, auch einschließlich der Ausnehmung 24 gefertigt worden ist.

## Patentansprüche

1. Kontaktiervorrichtung (10) eines elektronischen Geräts für eine Chipkarte,
mit einem Kontaktträger (11) aus Isolierstoff und darin verankerten Kontaktelementen (13) zur Verbindung der Kontaktflächen der Chipkarte mit Leiterbahnen eines in dem Gerät enthaltenen Schaltungsträgers,
wobei die Kontaktelemente (13) jeweils einen Kontaktabschnitt (15) zur Kontaktierung der Chipkarte, einen Anschlussabschnitt (14) zur Kontaktierung des geräteseitigen Schaltungsträgers und einen Ankerabschnitt (16) zur Festlegung im Kontaktträger (11) aufweisen
und wobei in den Kontaktträger (11) elektronische Bauelemente (17) integriert sind,
wobei ferner die Kontaktelemente (13) Bestandteile eines Stanzgitters (23) sind, das Anschlussflächen (20) für an den elektronischen Bauelementen (17) befindliche Kontaktflächen (19) ausbildet,
**dadurch gekennzeichnet, dass**
Abschnitte des Stanzgitters (23) zumindest bereichsweise in unterschiedlichen Ebenen (E₁, E₂, E₃) angeordnet sind,
und - ausgehend von einer Grundebene (E₁) des Stanzgitters (23) - in einer darauf folgenden Ebene (E₂) Anschlussflächen (20) für die elektronischen Bauelemente (17) und in einer darauf folgenden weiteren Ebene (E₃) die Lötanschlussflächen (14) der Kontaktelemente (13) angeordnet sind.

2. Kontaktiervorrichtung nach Anspruch 1, **dadurch gekennzeichnet, dass** die elektronischen Bauelemente (17) mindestens eine Schutzbeschaltung wie eine solche gegen hohe Ströme, Überspannungen oder Energien bei hohen Frequenzen und/oder eine EMI-Filter-Funktion realisieren.

3. Kontaktiervorrichtung nach Anspruch 1 oder 2, **dadurch gekennzeichnet, dass** die elektronischen Bauelemente (17) Pullup- oder Pulldown-Widerstände umfassen.

4. Kontaktiervorrichtung nach einem der Ansprüche 1 bis 3, **dadurch gekennzeichnet, dass** die elektronischen Bauelemente (17) in einen Chip (18) integriert sind.

5. Kontaktiervorrichtung nach einem der Ansprüche 1 bis 4, **dadurch gekennzeichnet, dass** die elektronischen Bauelemente (17) vom Isoliermaterial des Kontaktträgers (11) zumindest teilweise umspritzt sind.

6. Kontaktiervorrichtung nach Anspruch 4, **dadurch gekennzeichnet, dass** der Chip (18) in eine zu seiner Aufnahme bestimmte Ausnehmung (24) des Kontaktträgers (11) eingesetzt ist.

7. Kontaktiervorrichtung nach Anspruch 1, **dadurch gekennzeichnet, dass** der jeweilige Versatz der Ebenen (E₁, E₂, E₃) durch Verkröpfungen (21; 22) der entsprechenden Abschnitte des Stanzgitters (23) erzeugt ist.

8. Kontaktiervorrichtung nach Anspruch 4, **dadurch gekennzeichnet, dass** der Chip (18) allseits vom Isolierwerkstoff des Kontaktträgers (11) umspritzt ist.

9. Kontaktiervorrichtung nach Anspruch 4 oder 5, **dadurch gekennzeichnet, dass** der Chip (18) auf die Anschlussflächen (20) des Stanzgitters (23) aufgelötet oder aufgeklebt ist.

## Claims

1. Bonding device (10) of an electronic device for a chip card, with a bonding carrier (11) of insulating material and bonding elements (13) anchored in it to connect the bonding pads of the chip card to tracks of a circuit carrier contained in the device, the bonding elements (13) each having a bonding section (15) for bonding to the chip card, a connection section (14) for bonding to the device-side circuit carrier, and an anchor section (16) for fixing in the bonding carrier (11), and wherein electronic components (17) are integrated into the bonding carrier (11), and wherein furthermore the bonding elements (13) are parts of a lead frame (23), which forms connecting surfaces (20) for the bonding pads (19) on the electronic components (17), **characterized in that** sections of the lead frame (23) are arranged at least in regions at different levels (E₁, E₂, E₃), and - starting from a base level (E₁) of the lead frame (23) - in a level (E₂) following that, connecting surfaces (20) for the electronic components (17) are arranged, and in a further level (E₃) following that, the solder connecting surfaces (14) of the bonding elements (13) are arranged.

2. Bonding device according to Claim 1, **characterized in that** the electronic components (17) implement at least one protective circuit such as one against high currents, over-voltages or energies at high frequencies, and/or an EMI filter function.

3. Bonding device according to Claim 1 or 2, **characterized in that** the electronic components (17) include pull-up or pull-down resistors.

4. Bonding device according to any one of Claims 1 to 3, **characterized in that** the electronic components (17) are integrated in a chip (18).

5. Bonding device according to any one of Claims 1 to 4, **characterized in that** the electronic components (17) are at least partly extrusion-coated with the insulating material of the bonding carrier (11).

6. Bonding device according to Claim 4, **characterized in that** the chip (18) is inserted into a recess (24), which is intended to receive it, of the bonding carrier (11).

7. Bonding device according to Claim 1, **characterized in that** the offsets of the levels (E₁, E₂, E₃) are each generated by crankings (21; 22) of the corresponding sections of the lead frame (23).

8. Bonding device according to Claim 4, **characterized in that** the chip (18) is extrusion-coated on all sides with the insulating material of the bonding carrier (11).

9. Bonding device according to Claim 4 or 5, **characterized in that** the chip (18) is soldered or attached by adhesive to the connecting surfaces (20) of the lead frame (23).

## Revendications

1. Dispositif de contact (10) d'un appareil électronique pour une carte à puce
- avec un porte-contact (11) en matière isolante et des éléments de contact (13) fixés dedans pour connecter les surfaces de contact de la carte à puce aux pistes conductrices d'un support de circuit présent dans l'appareil,
- les éléments de contact (13) présentant respectivement une section de mise en contact (15) pour mise en contact de la carte à puce, une section de raccordement (14) pour mise en contact du support de circuit côté appareil et une section de fixation (16) pour disposition dans le porte-contact (11),
- des composants électroniques (17) étant intégrés dans le porte-contact (11),
- des éléments de contact (13) étant en outre des éléments constitutifs d'une grille estampée (23) qui forme des surfaces de raccordement (20) pour des surfaces de contact (19) situées au niveau des composants électroniques (17), **caractérisé en ce que**
- des sections de la grille estampée (23) sont disposées au moins partiellement dans des plans différents (E₁, E₂, E₃) et **en ce**
- **qu'**en partant d'un plan de base (E₁) de la grille estampée (23), des surfaces de contact (20) pour les composants électroniques (17) sont disposées dans un plan suivant (E₂), et dans un autre plan suivant (E₃), sont disposées les surfaces de raccordement soudé (14) des éléments de contact (13).

2. Dispositif de contact selon la revendication 1, **caractérisé en ce que** les composants électroniques (17) réalisent au moins un circuit de protection tel que celui contre des courants, surtensions ou énergies élevés, en présence de fréquences élevées et/ou d'une fonction de filtre EMI.

3. Dispositif de contact selon la revendication 1 ou 2, **caractérisé en ce que** les composants électroniques (17) comprennent des résistances d'excursion basse ou d'excursion haute.

4. Dispositif de contact selon l'une des revendications 1 à 3, **caractérisé en ce que** les composants électroniques (17) sont intégrés dans une puce (18).

5. Dispositif de contact selon l'une des revendications 1 à 4, **caractérisé en ce que** les composants électroniques (17) sont, au moins en partie, couverts par injection, par le matériau isolant du porte-contact (11).

6. Dispositif de contact selon la revendication 4, **caractérisé en ce que** la puce (18) est placée dans un évidement (24), destiné à son logement, du porte-contact (11).

7. Dispositif de contact selon la revendication 1, **caractérisé en ce que** chaque déport des plans (E₁, E₂, E₃) est créé par des coudages (21, 22) des sections correspondantes de la grille estampée (23).

8. Dispositif de contact selon la revendication 4, **caractérisé en ce que** la puce (18) est couverte partout par injection par le matériau isolant du porte-contact (11).

9. Dispositif de contact selon la revendication 4 ou 5, **caractérisé en ce que** la carte (18) est brasée ou collée sur les surfaces de raccordement (20) de la grille estampée (23).
